# EUROPEAN PATENT SPECIFICATION

(11) **EP 2 768 115 B1**
(45) Date of publication and mention of the grant of the patent: **15.09.2021**
(21) Application number: 11874093.5
(22) Date of filing: 13.10.2011
(51) Int. Cl.: H02J 13/00, H02H 3/02, H02H 1/00, H02H 3/00, H02H 7/26, H02H 3/06

(54) **PROTECTIVE CONTROL DEVICE**
SCHÜTZENDE KONTROLLVORRICHTUNG
DISPOSITIF DE COMMANDE DE PROTECTION

(43) Date of publication of application: 20.08.2014
(73) Proprietor: Mitsubishi Electric Corporation, Tokyo 100-8310 (JP)
(72) Inventor: TANAKA, Yasuyuki, Tokyo 100-8310 (JP)
(74) Representative: Granleese, Rhian Jane
(86) International application number: PCT/JP2011/073573
(87) International publication number: WO 2013/054419

(56) References cited:
- JP-A- S6 016 117
- JP-A- S6 074 917
- JP-A- 2004 350 421
- JP-A- 2010 272 453
- None

## Description

### Field

The present invention relates to a digital protection control device that acquires a bus voltage and operates even when a voltage transformer for measuring a bus voltage is not arranged on a substation bus or even in a state where a voltage transformer for measuring a bus voltage cannot be used.

### Background

In order to reduce costs, instead of using a voltage transformer for acquiring a bus voltage, conventional protection control devices, for example, capture secondary outputs of voltage transformers arranged on the lines branching off from the bus and compare these outputs in an analog manner on the basis the circuit breaker conditions and the disconnector conditions on the lines (connecting the secondary outputs of the voltage transformers with each other), thereby selecting and acquiring a bus voltage (for example, Non Patent Literature 1 described below).

JP2004350421 A represents the closest prior art and discloses a supervisory control system which estimates a bus voltage in a power system, wherein a plurality of transmission lines are connected to the bus via switches.

### Citation List

Non Patent Literature 1: "Supply and Installation Substation Automation Systems PM2-0008-WBX", Metropolitan Electricity Authority (Klongmahasawad (KMS) Substation explanatory diagram)

### Summary

### Technical Problem

However, in a digital protection control system that consists of protection control terminals that convert secondary outputs of voltage transformers into digital outputs and a protection control device that performs a protection calculation by using the digital outputs from the protection control terminals, digital data is output from the protection control terminals; therefore, it is difficult to use a method of acquiring a bus voltage by simply comparing the secondary outputs of the voltage transformers, which is used in an analog system.

The present invention has been achieved in view of the above and an object of the present invention is to obtain a digital protection control device capable of acquiring a bus voltage by using digital data output from protection control terminals. Solution to Problem

In order to solve the above problems and achieve the object, the present invention is a digital protection control device according to claim 1.

### Advantageous Effects of Invention

According to the present invention, an effect is obtained where a bus voltage can be acquired by using digital data output from protection control terminals.

### Brief Description of Drawings

FIG. 1 is a circuit configuration diagram of the periphery of circuit breakers focusing on a protection control device according to first to third embodiments of the present invention.
FIG. 2 is a configuration diagram of the protection control device illustrated in FIG. 1.
FIG. 3 is a flowchart of a simulated-bus-voltage selection process performed by a simulated-bus-voltage selecting unit according to the first embodiment of the present invention.
FIG. 4 is a flowchart of a synchronism detection process performed by a synchronism indicator according to the first embodiment of the present invention.
FIG. 5 is a flowchart of the simulated-bus-voltage selection process performed by a simulated-bus-voltage selecting unit according to a second embodiment of the present invention.
FIG. 6 is a configuration diagram of a protection control device according to a third embodiment of the present invention.
FIG. 7 is a flowchart of the synchronism detection process performed by a synchronism indicator according to the third embodiment of the present invention.
FIG. 8 is a first diagram for explaining another example of an application of the protection control device according to the first to third embodiments of the present invention.
FIG. 9 is a second diagram for explaining another example of an application of the protection control device according to the first to third embodiments of the present invention.

### Description of Embodiments

Exemplary embodiments of a protection control device according to the present invention will be explained below in detail with reference to the drawings. This invention is not limited to the embodiments.

### First Embodiment.

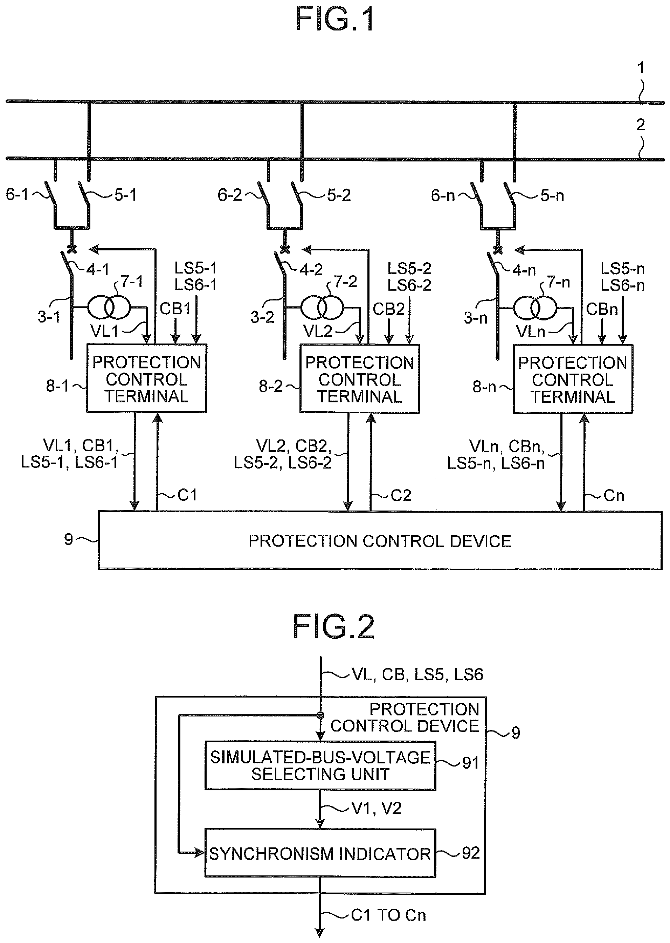

FIG. 1 is a circuit configuration diagram of the periphery of circuit breakers focusing on a protection control device according to first to third embodiments of the present invention. FIG. 2 is a configuration diagram of a protection control device 9 illustrated in FIG. 1. In the following explanation, when an explanation is made of a point that is common among all of protection control terminals 8-1 to 8-n, these are generically referred to as protection control terminal(s) 8. Moreover, lines 3-1 to 3-n are referred to as line(s) 3, circuit breakers 4-1 to 4-n are referred to as circuit breaker(s) 4, disconnectors 5-1 to 5-n are referred to as disconnector(s) 5, disconnectors 6-1 to 6-n are referred to as disconnector(s) 6, and voltage transformers 7-1 to 7-n are referred to as voltage transformer(s) 7.

The digital protection control system illustrated in FIG. 1 is configured to include, as main components, the protection control device 9 and the protection control terminals 8. The disconnector 5 and the circuit breaker (CB) 4 are arranged in sequence, starting from a bus 1 side, between the bus 1 and the line 3 illustrated in FIG. 1. The disconnector 6 and the circuit breaker 4 are arranged in sequence, starting from a bus 2 side, between the bus 2 and the line 3. The disconnector 5 is arranged between the bus 1 and the circuit breaker 4 and the disconnector 6 is arranged between the bus 2 and the circuit breaker 4. The voltage transformer 7 for acquiring a line voltage is connected to the line 3.

In a case where the circuit breakers 4 receive switch-on instructions from the outside, when line-voltage data VL1 to VLn, first disconnector data LS5-1 to LS5-n indicating the states of the disconnectors 5, second disconnector data LS6-1 to LS6-n indicating the states of the disconnectors 6, and circuit breaker data CB1 to CBn indicating the states of the circuit breakers 4 satisfy a certain condition (which will be described later), the circuit breakers 4 are switched on (enter an "on" state). In the following explanation, the line-voltage data VL1 to VLn are referred to as line-voltage data VL, the first disconnector data LS5-1 to LS5-n are referred to as first disconnector data LS5, the second disconnector data LS6-1 to LS6-n are referred to as second disconnector data LS6, and the circuit breaker data CB1 to CBn are referred to as circuit breaker data CB.

The protection control terminals 8 receive the line-voltage data VL1 to VLn detected by the voltage transformers 7, the first disconnector data LS5, the second disconnector data LS6, and the circuit breaker data CB and then output the voltage data VL on the basis of these pieces of data.

FIG. 2 is a configuration diagram illustrating the protection control device 9 according to the first embodiment of the present invention. The protection control device 9 is configured to include, as main components, a simulated-bus-voltage selecting unit 91 and a synchronism indicator 92.

The simulated-bus-voltage selecting unit 91 is used to select normal values (values correctly indicating the voltages of the buses 1 and 2) from the voltage data VL output from the protection control terminals 8. The priority of the lines 3 is preset in the simulated-bus-voltage selecting unit 91 according to the first embodiment and the simulated-bus-voltage selecting unit 91 selects a simulated bus voltage V1 and a simulated bus voltage V2 from the voltage data VL on the basis of the data from the protection control terminals 8 and the priority and then outputs the selected simulated bus voltages V1 and V2 to the synchronism indicator 92. The priority is information necessary for determining the simulated bus voltages V1 and V2 from the voltage data VL. For example, when five lines 3 are connected to the bus 1, the priority is used for determining which of the lines 3 is selected as a detection source of the simulated bus voltage V1 from among these five lines. The priority is, for example, set according to the installation time of each of the lines 3 and is set such that the line 3 whose installation time is earlier has a higher priority. However, the method of setting the priority is not limited thereto and the priority may be set by using any other method.

The synchronism indicator 92 receives the voltage data VL and determines, on the basis of the data, whether the simulated bus voltage V1 and the voltage data VL are in a synchronized state satisfying a certain relationship (whether no problem occurs even if the circuit breaker 4 is switched on again) and determines whether the simulated bus voltage V2 and the voltage data VL are in a synchronized state satisfying a certain relationship. This synchronism determination is performed such that, for example, when the difference in each of the frequency, phase, and voltage value between the simulated bus voltage V1 (V2) and the voltage data VL is within a defined range, it is determined that they are in a state (synchronized state) satisfying a certain relationship, and information C1 to Cn indicating that they are in the synchronized state is transmitted to the protection control terminals 8 from the synchronism indicator 92. After receiving switch-on instructions from the outside, the protection control terminals 8 accept the switch-on instructions when the protection control terminals 8 receive the information C1 to Cn from the synchronism indicator 92, and switch on the circuit breakers 4 corresponding to the switch-on instructions.

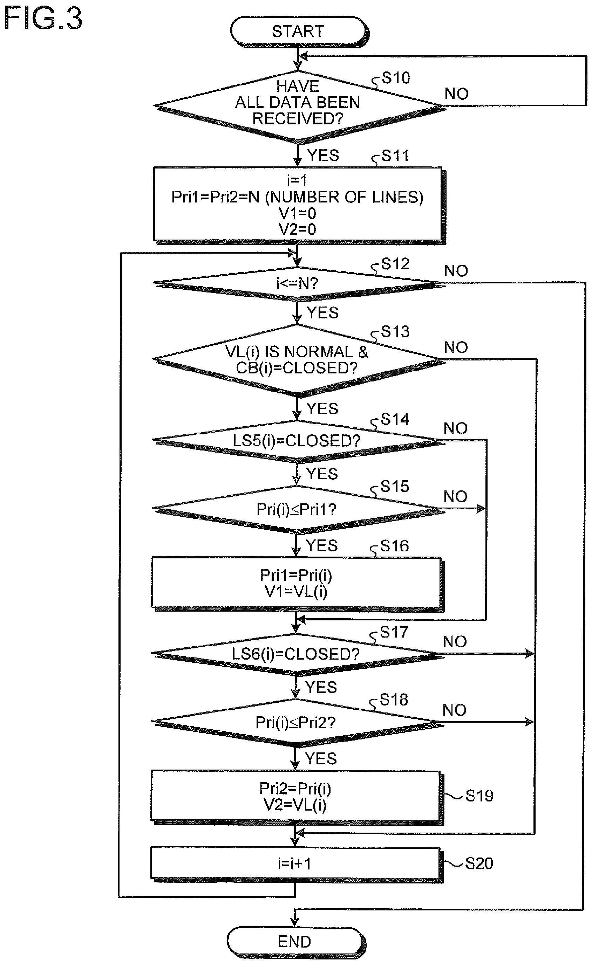

The operation of the protection control device 9 according to the first embodiment will be explained below. FIG. 3 is a flowchart of a simulated-bus-voltage selection process performed by the simulated-bus-voltage selecting unit 91 according to the first embodiment of the present invention. The simulated-bus-voltage selecting unit 91 determines whether all the pieces of the voltage data VL have been received. If all the pieces of the voltage data VL have not been received (No in Step S10), the simulated-bus-voltage selecting unit 91 continues the receiving process until all the pieces of the voltage data VL are received. When all the pieces of the voltage data VL have been received (Yes in Step S10), the simulated-bus-voltage selecting unit 91 performs the process in Step S11.

In Step S11, the simulated-bus-voltage selecting unit 91 sets a variable i, indicating a line to be processed, to "1", sets the total number of lines N in a priority Pri1 of the line 3 corresponding to the simulated bus voltage V1 that is currently set as the voltage of the bus 1, sets the total number of lines N in a priority Pri2 of the lines 3 corresponding to the simulated bus voltage V2 that is currently set as the voltage of the bus 2, sets "0" as the simulated bus voltage V1, and sets "0" as the simulated bus voltage V2.

Next, the simulated-bus-voltage selecting unit 91 determines whether the variable i is equal to or less than the total number of lines N. If the variable i exceeds the total number of lines N (No in Step S12), the simulated-bus-voltage selecting unit 91 ends the simulated-bus-voltage selection process. If the variable i is equal to or less than the total number of lines N (Yes in Step S12), the simulated-bus-voltage selecting unit 91 performs the process in Step S13.

In Step S13, if the voltage data VL(i) is abnormal and/or the CB(i) is in an open state (No in Step S13), the simulated-bus-voltage selecting unit 91 performs the process in Step S20. If the voltage data VL(i) is normal and the CB(i) is in a closed state (Yes in Step S13), the simulated-bus-voltage selecting unit 91 performs the process in Step S14.

In Step S14, the simulated-bus-voltage selecting unit 91 checks whether the disconnector 5 (LS5(i)) of the line 3 corresponding to the value of the variable i is in a closed state. If the LS5(i) is in an open state (No in Step S14), the simulated-bus-voltage selecting unit 91 performs the process in Step S17 and, if the LS5(i) is in a closed state (Yes in Step S14), the simulated-bus-voltage selecting unit 91 performs the process in Step S15.

In Step S15, the simulated-bus-voltage selecting unit 91 compares the priority Pri(i) of the line 3 corresponding to the variable i with the value of the Pri1. If the value of the priority Pri(i) is larger than the value of the Pri1 (No in Step S15), the simulated-bus-voltage selecting unit 91 determines that the priority Pri(i) is low and performs the process in Step S17 and, if the value of the priority Pri(i) is equal to or lower than the value of the Pri1 (Yes in Step S15), the simulated-bus-voltage selecting unit 91 determines that the priority Pri(i) is high and performs the process in Step S16.

In Step S16, the simulated-bus-voltage selecting unit 91 sets the priority Pri(i) to the priority Pri1 and sets the voltage data VL(i) as the simulated bus voltage V1. In Step S17, the simulated-bus-voltage selecting unit 91 checks whether the disconnector (LS6(i)) of the line 3 corresponding to the value of the variable i is in a closed state. If the LS6(i) is in an open state (No in Step S17), the simulated-bus-voltage selecting unit 91 performs the process in Step S20 and, if the LS6(i) is in a closed state (Yes in Step S17), the simulated-bus-voltage selecting unit 91 performs the process in Step S18.

In Step S18, the simulated-bus-voltage selecting unit 91 compares the priority Pri(i) with the value of the Pri2. If the value of the priority Pri(i) is larger than the value of the Pri2 (No in Step S18), the simulated-bus-voltage selecting unit 91 determines that the priority Pri(i) is low and performs the process in Step S20 and, if the value of the priority Pri(i) is equal to or lower than the value of the Pri2 (Yes in Step S18), the simulated-bus-voltage selecting unit 91 determines that the priority Pri(i) is high and performs the process in Step S19.

In Step S19, the simulated-bus-voltage selecting unit 91 sets the priority Pri(i) to the priority Pri2 and sets the voltage data VL(i) as the simulated bus voltage V2. Furthermore, in Step S20, the simulated-bus-voltage selecting unit 91 increments the variable i and performs the process in Step S12 again. Then, the simulated bus voltages V1 and V2 selected by the simulated-bus-voltage selecting unit 91 are transmitted to the synchronism indicator 92.

In the flow in FIG. 3, the open/closed state of the disconnector 5 and the disconnector 6 is checked in sequence starting with the disconnector 5 and then the disconnector 6; however, the open/closed state may be checked in sequence starting with the disconnector 6 and then the disconnector 5. Moreover, the operation of the simulated-bus-voltage selecting unit 91 is not limited to that illustrated in the flow in FIG. 3 and, for example, it is possible to use a method of performing the operation on the basis of the priority orders (priority 1, 2, and so on) instead of in the order of line numbers as the order for checking the device state of all of the lines 3.

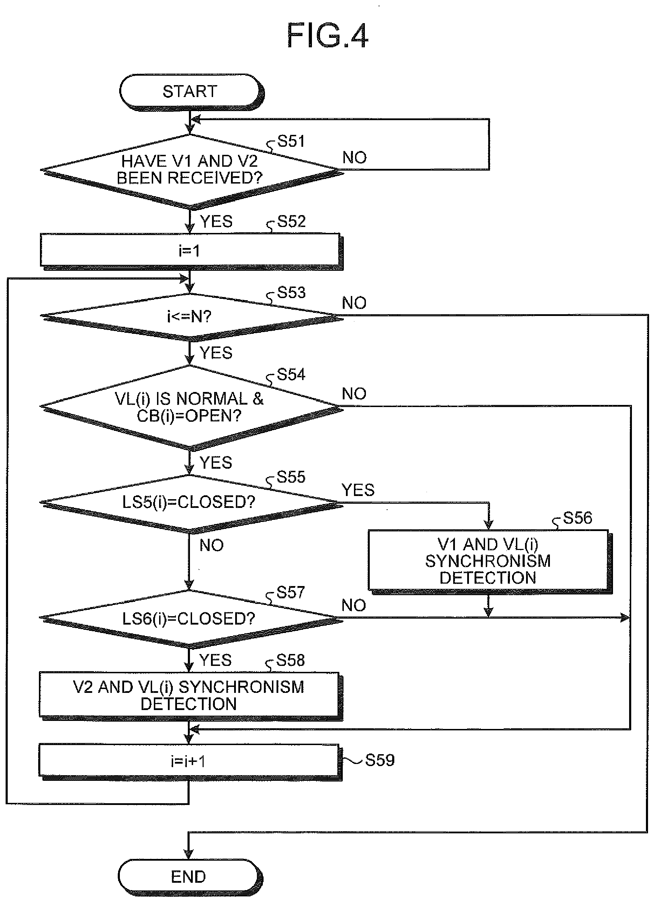

FIG. 4 is a flowchart of a synchronism detection process performed by the synchronism indicator 92 according to the first embodiment of the present invention. The synchronism indicator 92 determines whether the simulated bus voltages V1 and V2 have been received from the simulated-bus-voltage selecting unit 91. If the simulated bus voltages V1 and V2 have not been received (No in Step S51), the synchronism indicator 92 continues the simulated-bus-voltage receiving process until the simulated bus voltages V1 and V2 are received. When the simulated bus voltages V1 and V2 have been received (Yes in Step S51), the synchronism indicator 92 performs the process in Step S52.

In Step S52, the synchronism indicator 92 sets the variable i, indicating a line to be processed, to "1". Moreover, in Step S53, the synchronism indicator 92 determines whether the variable i is equal to or less than the total number of lines N. If the variable i exceeds the total number of lines N (No in Step S53), the synchronism indicator 92 ends the synchronism detection process. If the variable i is equal to or less than the total number of lines N (Yes in Step S53), the synchronism indicator 92 performs the process in Step S54.

In Step S54, the synchronism indicator 92 checks that the voltage data VL(i) of the line 3 corresponding to the value of the variable i is normal and checks whether the CB(i) arranged on the line 3 corresponding to the value of the variable i is in an open state. If the voltage data VL(i) is abnormal and/or the CB(i) is in a closed state (No in Step S54), the synchronism indicator 92 performs the process in Step S59. If the voltage data VL(i) is normal and the CB(i) is in an open state (Yes in Step S54), the synchronism indicator 92 performs the process in Step S55.

In Step S55, the synchronism indicator 92 checks whether the disconnector (LS5(i)) of the line 3 corresponding to the value of the variable i is in a closed state. If the LS5(i) is in a closed state (Yes in Step S55), the synchronism indicator 92 performs the process in Step S56 and, if the LS5(i) is in an open state (No in Step S55), the synchronism indicator 92 performs the process in Step S57.

In Step S56, the synchronism indicator 92 performs a synchronism detection on the simulated bus voltage V1 and the voltage data VL(i). Specifically, when the difference in each of the frequency, phase, and voltage value between the simulated bus voltage V1 and the voltage data VL is within a defined range, the synchronism indicator 92 determines that the simulated bus voltage V1 and the voltage data VL(i) are in a synchronized state and outputs a corresponding one of the pieces of the information C1 to Cn to the protection control terminal 8, and then performs the process in Step S59.

In Step S57, the synchronism indicator 92 checks whether the disconnector (LS6(i)) of the line 3 corresponding to the value of the variable i is in a closed state. If the LS6(i) is in a closed state (Yes in Step S57), the synchronism indicator 92 performs the process in Step S58 and, if the LS6(i) is in an open state (No in Step S57), the synchronism indicator 92 performs the process in Step S59.

In Step S58, the synchronism indicator 92 performs the synchronism detection on the simulated bus voltage V2 and the voltage data VL(i). Specifically, when the difference in each of the frequency, phase, and voltage value between the simulated bus voltage V2 and the voltage data VL is within a defined range, the synchronism indicator 92 determines that the simulated bus voltage V2 and the voltage data VL(i) are in a synchronized state and outputs a corresponding one of the pieces of the information C1 to Cn to the protection control terminal 8, and then performs the process in Step S59. Finally, in Step S59, the synchronism indicator 92 increments the variable i and performs the process in Step S53 again. In the flow in FIG. 4, the open/closed state of the disconnector 5 and the disconnector 6 is checked in sequence starting with the disconnector 5 and then the disconnector 6; however, the open/closed state may be checked in sequence starting with the disconnector 6 and then the disconnector 5.

As described above, the priority of the lines 3 is set in the simulated-bus-voltage selecting unit 91 according to the first embodiment. When the circuit breaker 4 and the disconnectors 5 and 6 are in a closed state, the simulated-bus-voltage selecting unit 91 selects the simulated bus voltages V1 and V2 corresponding to the line 3 having the highest priority. Moreover, upon receiving the simulated bus voltages V1 and V2, the synchronism indicator 92 according to the first embodiment performs the synchronism detection process when the circuit breaker 4 is in an open state and the disconnectors 5 and 6 are in a closed state. Therefore, when a voltage transformer for measuring bus voltages is not arranged on the buses 1 and 2 or in a state where the voltage transformer cannot be used, it is possible to acquire the bus voltages even in a digital protection control system that is configured to include the protection control terminals 8 that convert the line voltages VL1 to VLn into digital outputs and the protection control device 9 that performs a protection calculation by using the digital outputs from the protection control terminals 8. Accordingly, it is possible to eliminate the voltage transformer for measuring the bus voltages of the buses 1 and 2 and thus costs can be reduced. Furthermore, because the simulated-bus-voltage selection process and the synchronism detection process are performed in the protection control device 9, the calculation load of each protection control terminal 8 can be reduced, for example, compared with a case where each protection control terminal 8 performs the synchronism detection process.

### Second Embodiment.

The protection control device 9 in the first embodiment is configured to perform the simulated-bus-voltage selection process by using the priority after all the pieces of the voltage data VL have been received. The protection control device 9 according to a second embodiment is configured to perform the simulated-bus-voltage selection process by using the voltage data VL that arrives first from among the data transmitted from the protection control terminals 8. The synchronism detection process is similar to that in the first embodiment and therefore an explanation thereof is omitted. Hereinafter, components identical to those of the first embodiment are denoted by the same reference signs and explanations thereof will be omitted, and only different points are explained.

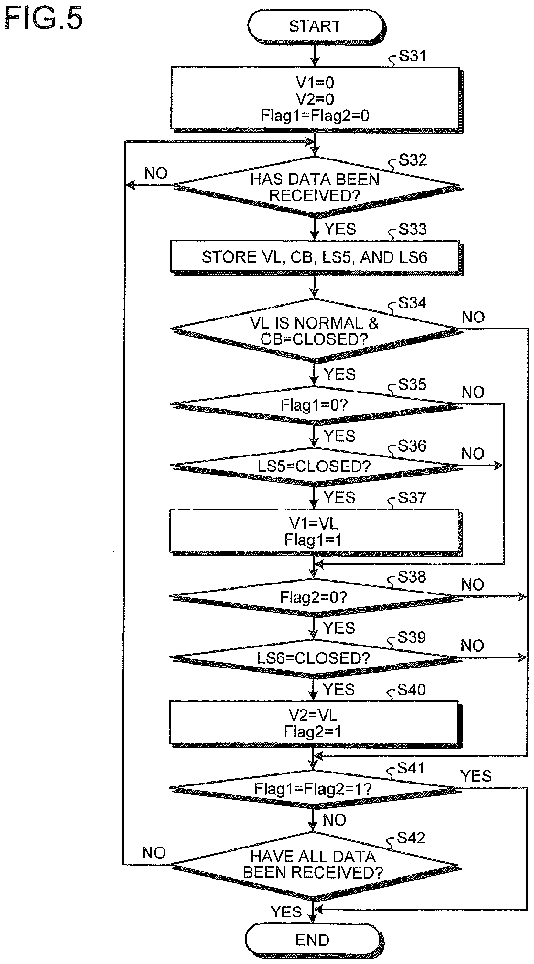

FIG. 5 is a flowchart of the simulated-bus-voltage selection process performed by the simulated-bus-voltage selecting unit 91 according to the second embodiment of the present invention. The simulated-bus-voltage selecting unit 91 sets the simulated bus voltage V1 that is currently set as a voltage of the bus 1 to "0", sets the simulated bus voltage V2 that is currently set as a voltage of the bus 2 to "0", sets a Flag 1 indicating whether the voltage data VL that is the simulated bus voltage V1 has already been selected to "0" (unselected), and sets a Flag 2 indicating whether the voltage data VL that is the simulated bus voltage V2 has already been selected to "0" (Step S31).

In Step S32, the simulated-bus-voltage selecting unit 91 determines whether any piece of the voltage data VL from the protection control terminals 8 has been received. If no voltage data VL has been received (No in Step S32), the simulated-bus-voltage selecting unit 91 continues a receiving process until any piece of the voltage data VL is received. When any piece of the voltage data VL is received (Yes in Step S32), the simulated-bus-voltage selecting unit 91 performs the process in Step S33.

In Step S33, the simulated-bus-voltage selecting unit 91 stores the voltage data VL, the circuit breaker data CB, the first disconnector data LS5, and the second disconnector data LS6.

In Step S34, the simulated-bus-voltage selecting unit 91 checks that the voltage data VL is normal and checks whether the CB is in a closed state. If the voltage data VL is abnormal and/or the CB is in an open state (No in Step S34), the simulated-bus-voltage selecting unit 91 performs the process in Step S41. If the voltage data VL(i) is normal and the CB is in a closed state (Yes in Step S34), the simulated-bus-voltage selecting unit 91 performs the process in Step S35.

In Step S35, the simulated-bus-voltage selecting unit 91 determines whether the voltage data VL has already been selected. If the Flag 1 is "1" (No in Step S35), the simulated-bus-voltage selecting unit 91 performs the process in Step S38 and, if the Flag 1 is "0" (Yes in Step S35), the simulated-bus-voltage selecting unit 91 performs the process in Step S36.

In Step S36, the simulated-bus-voltage selecting unit 91 checks whether the disconnector (LS5) is in a closed state. If the LS5 is in an open state (No in Step S36), the simulated-bus-voltage selecting unit 91 performs the process in Step S38 and, if the LS5 is in a closed state (Yes in Step S36), the simulated-bus-voltage selecting unit 91 performs the process in Step S37.

In Step S37, the simulated-bus-voltage selecting unit 91 sets the voltage data VL of the line 3 received in Step S32 as the simulated bus voltage V1 and sets the Flag 1 to "1" (selected).

In Step S38, the simulated-bus-voltage selecting unit 91 determines whether the voltage data VL has already been selected. If the Flag 2 is "1" (No in Step S38), the simulated-bus-voltage selecting unit 91 performs the process in Step S41 and, if the Flag 2 is "0" (Yes in Step S38), the simulated-bus-voltage selecting unit 91 performs the process in Step S39.

In Step S39, the simulated-bus-voltage selecting unit 91 checks whether the disconnector (LS6) is in a closed state. If the LS6 is in an open state (No in Step S39), the simulated-bus-voltage selecting unit 91 performs the process in Step S41. If the LS6 is in a closed state (Yes in Step S39), the simulated-bus-voltage selecting unit 91 performs the process in Step S40.

In Step S40, the simulated-bus-voltage selecting unit 91 sets the voltage data VL of the line 3 received in Step S32 as the simulated bus voltage V2 and sets the Flag 2 to "1" (selected).

In Step S41, the simulated-bus-voltage selecting unit 91 determines whether the values of the Flag 1 and the Flag 2 are both "1". If either or both of the Flag 1 and the Flag 2 has a value of "0" (No in Step S41), the simulated-bus-voltage selecting unit 91 performs the process in Step S42. If the values of the Flag 1 and the Flag 2 are both "1" (Yes in Step S41), the simulated-bus-voltage selecting unit 91 ends the process.

In the flow in FIG. 5, the states of the Flags 1 and 2 are checked after the open/closed state of the disconnector 5 or the disconnector 6 is checked; however, the open/closed state of the disconnector 5 or the disconnector 6 may be checked after the states of the Flags 1 and 2 are checked.

As explained above, the protection control device 9 according to the second embodiment is such that the simulated-bus-voltage selecting unit determines whether the circuit breaker 4 and the disconnectors 5 and 6 are in a closed state in order of the arrival of the voltage data VL from the protection control terminals 8 and, if the circuit breaker 4 and the disconnectors 5 and 6 are in a closed state, the simulated-bus-voltage selecting unit selects the simulated bus voltages V1 and V2. Therefore, the bus voltages can be selected earlier than in the first embodiment and thus the processing load of the protection control device 9 itself can be reduced.

### Third Embodiment.

The protection control device 9 in the first embodiment is configured to perform the synchronism detection process on all the lines 3 by changing the variable i. The protection control device 9 in a third embodiment is configured to, after performing the simulated-bus-voltage selection process similar to that in the first embodiment, perform the synchronism detection process only on the line 3 corresponding to the protection control terminal 8 that is a transmission source of a corresponding one of circuit-breaker switch-on requests D1 to Dn and transmit a corresponding one of the pieces of the information C1 to Cn to the protection control terminal 8. The circuit-breaker switch-on requests D1 to Dn are, for example, data that is transmitted to the protection control device 9 from the protection control terminal 8-1 in response to a manual switch-on request from the operator when the operator switches on the circuit breaker 4-1 again. Hereinafter, components identical to those of the first embodiment are denoted by the same reference signs and explanations thereof will be omitted, and only different points are explained.

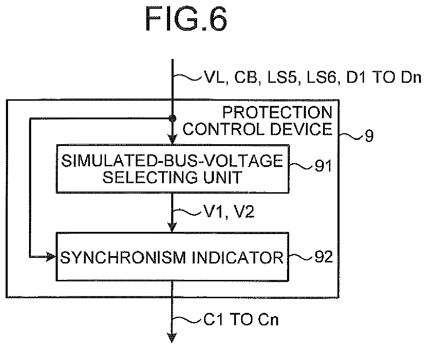

FIG. 6 is a configuration diagram of the protection control device 9 according to the third embodiment of the present invention. The protection control device 9 in the present embodiment is different from the protection control device 9 illustrated in FIG. 2 in that the circuit-breaker switch-on requests D1 to Dn output from the protection control terminals 8 are input to the protection control device 9.

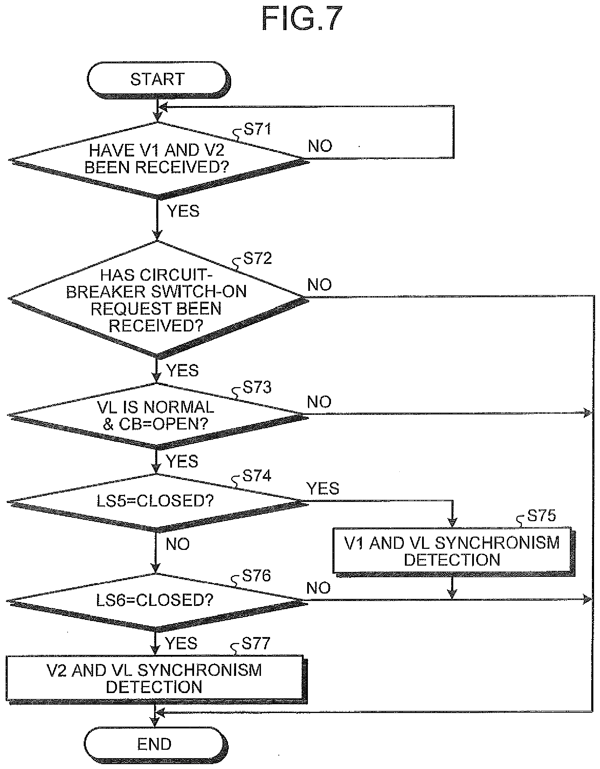

FIG. 7 is a flowchart of the synchronism detection process performed by the synchronism indicator 92 according to the third embodiment of the present invention. The synchronism indicator 92 determines whether all the simulated bus voltages V1 and V2 have been received from the simulated-bus-voltage selecting unit 91. If all the simulated bus voltages V1 and V2 have not been received (No in Step S71), the synchronism indicator 92 continues the simulated-bus-voltage receiving process until the simulated bus voltages V1 and V2 are received. When the simulated bus voltages V1 and V2 have been received (Yes in Step S71), the synchronism indicator 92 performs the process in Step S72.

In Step S72, the synchronism indicator 92 determines whether any of the circuit-breaker switch-on requests D1 to Dn has been received. If none of the circuit-breaker switch-on requests D1 to Dn has been received (No in Step S72), the synchronism indicator 92 ends the synchronism detection process. When any of the circuit-breaker switch-on requests D1 to Dn is received (Yes in Step S72), the synchronism indicator 92 performs the process in Step S73.

In Step S73, the synchronism indicator 92 checks whether the voltage data VL of the line 3 corresponding to the protection control terminal 8 that is a transmission source of a corresponding one of the circuit-breaker switch-on requests D1 to Dn is normal and checks whether the CB arranged on the line 3 is in an open state. If the voltage data VL is abnormal and/or the CB is in a closed state (No in Step S73), the synchronism indicator 92 ends the synchronism detection process. If the voltage data VL is normal and the CB is in an open state (Yes in Step S73), the synchronism indicator 92 performs the process in Step S74.

In Step S74, the synchronism indicator 92 checks whether the disconnector (LS5) of the line 3 corresponding to the protection control terminal 8 that is a transmission source of a corresponding one of the circuit-breaker switch-on requests D1 to Dn is in a closed state. If the LS5 is in a closed state (Yes in Step S74), the synchronism indicator 92 performs the process in Step S75 and, if the LS5 is in an open state (No in Step S74), the synchronism indicator 92 performs the process in Step S76.

In Step S75, the synchronism indicator 92 performs the synchronism detection on the simulated bus voltage V1 and the voltage data VL. If the synchronism indicator 92 determines that the simulated bus voltage V1 and the voltage data VL are in a synchronized state, the synchronism indicator 92 outputs a corresponding one of the pieces of the information C1 to Cn to the protection control terminal 8 that is a transmission source of a corresponding one of the circuit-breaker switch-on requests D1 to Dn and ends the synchronism detection process.

In Step S76, the synchronism indicator 92 checks whether the disconnector (LS6) of the line 3 corresponding to the protection control terminal 8 that is a transmission source of a corresponding one of the circuit-breaker switch-on requests D1 to Dn is in a closed state. If the LS6 is in a closed state (Yes in Step S76), the synchronism indicator 92 performs the process in Step S77. If the LS6 is in an open state (No in Step S76), the synchronism indicator 92 ends the synchronism detection process.

In Step S77, the synchronism indicator 92 performs the synchronism detection on the simulated bus voltage V2 and the voltage data VL. If the synchronism indicator 92 determines that the simulated bus voltage V2 and the voltage data VL are in a synchronized state, the synchronism indicator 92 outputs a corresponding one of the pieces of the information C1 to Cn to the protection control terminal 8 that is a transmission source of a corresponding one of the circuit-breaker switch-on requests D1 to Dn and ends the synchronism detection process. In the flow in FIG. 7, the open/closed state of the disconnector 5 and the disconnector 6 is checked in sequence starting with the disconnector 5 and then the disconnector 6; however, the open/closed state may be checked in sequence starting with the disconnector 6 and then the disconnector 5.

As explained above, the protection control device 9 according to the third embodiment is configured such that when the synchronism indicator 92 receives the simulated bus voltages V1 and V2, if the circuit breaker 4 arranged on the line 3 corresponding to the protection control terminal 8 that is a transmission source of the circuit-breaker switch-on request (D1 to Dn) is in an open state and the disconnectors 5 and 6 arranged on the line 3 are in a closed state, the synchronism indicator 92 performs the synchronism detection process and transmits a corresponding one of the pieces of the information C1 to Cn to the protection control terminal 8; therefore, the processing load of the protection control device 9 can be reduced compared with the case where the synchronism detection is performed on all the lines 3 as in the first embodiment and the amount of transmission of the information C1 to Cn transmitted to the protection control terminals 8 can be reduced compared with the first embodiment. Thus, it is possible to reduce the load on the network provided between the protection control terminals 8 and the protection control device 9. Particularly, the protection control device 9 in the third embodiment is preferable for a substation or the like in which the circuit breakers 4 are manually switched on instead of performing reclosing by using a protection relay.

In the above explanation, the protection control device in the second embodiment is configured to perform the simulated-bus-voltage selection process on a first-come-first-served basis and the protection control device in the third embodiment is configured to perform the synchronism detection process by using the circuit-breaker switch-on requests D. The protection control device 9 according to the embodiment of the present invention is not limited to this and may be configured such that the simulated-bus-voltage selection process in the second embodiment and the synchronism detection process in the third embodiment are combined. With such a configuration, it is possible to obtain the effects of the second and third embodiments.

As explained above, the protection control device 9 according to the first to third embodiments is the digital protection control device 9 that acquires a bus voltage by using data from the protection control terminals 8 that convert the voltages detected by the voltage transformers 7 arranged on the lines 3, the states of the circuit breakers 4 arranged on the lines 3, and the states of the disconnectors 5 and 6 arranged on the lines 3 into digital data, and that includes the simulated-bus-voltage selecting unit 91 that selects voltage data (VL) as the simulated bus voltages V1 and V2 that are simulated values of bus voltages on the basis of the voltage data (VL) related to a voltage, the data (CB) related to the states of the circuit breakers 4, and the data (LS) related to the states of the disconnectors 5 and 6 and the synchronism indicator 92 that performs the detection process of whether the voltage data (VL) and each of the simulated bus voltages V1 and V2 are in a synchronized state and outputs the information C1 to Cn indicating that the voltage data (VL) and each of the simulated bus voltages V1 and V2 are in a synchronized state to the protection control terminals 8. Therefore, it is possible to acquire a bus voltage by using digital data output from the protection control terminals 8.

The process flows according to the first to third embodiments can be applied also to the substation configuration, such as a 1-1/2CB bus system. Moreover, in the above explanation, explanation is made of an example in which the protection control device 9 according to the first to third embodiments of the present invention is applied to a double bus; however, the present invention can be applied also to a case of a single bus. Moreover, the protection control device 9 according to the first to third embodiments is one example of the content of the present invention and it is obvious that it can be combined with other publicly known technologies and the configuration can be changed, for example, by omitting a part thereof without departing from the scope of the present invention.

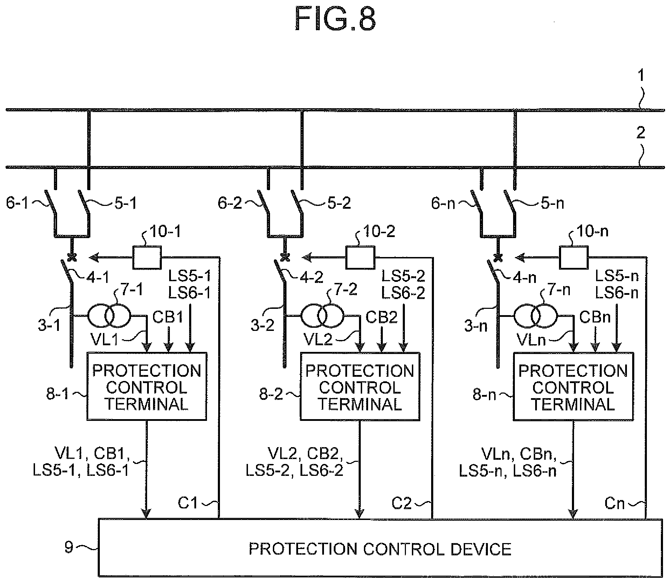

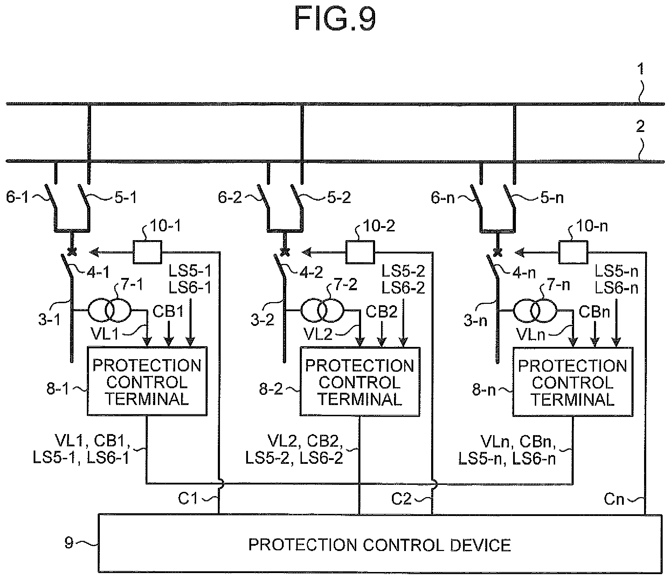

The protection control device 9 according to the first to third embodiments can be applied to the following configuration on the periphery of the circuit breakers. FIG. 8 is a first diagram for explaining another example of an application of the protection control device according to the first to third embodiments of the present invention. The protection control terminals 8 illustrated in FIG. 1 accept switch-on instructions upon receiving the information C1 to Cn and switch on the circuit breakers 4 when the switch-on condition is satisfied; however, IEDs (Intelligent Electric Devices) 10-1 to 10-n illustrated in FIG. 8 receive the information C1 to Cn from the protection control device 9 instead of the protection control terminals 8 and switch on the circuit breakers 4 when the switch-on condition is satisfied. FIG. 9 is a second diagram for explaining another example of an application of the protection control device according to the first to third embodiments of the present invention. The difference between FIG. 8 and FIG. 9 is in the communication configuration between the protection control terminals 8 and the protection control device 9. In FIG. 9, data output from the protection control terminals 8 is captured by the protection control device 9 via one network. As described above, even when the configuration is such that the information C1 to Cn generated based on the data transmitted from the protection control terminals 8 are input to the IEDs 10-1 to 10-n, the effects similar to those in the first to third embodiments can be obtained.

### Industrial Applicability

As described above, the present invention can be applied mainly to a merging unit of a protection relay and is particularly useful as an invention that can continue protection even when the sampling frequency is discontinued.

### Reference Signs List

1, 2 bus
3-1, 3-2, 3-n line
4-1, 4-2, 4-n circuit breaker
5-1, 5-2, 5-n, 6-1, 6-2, 6-n disconnector
7-1, 7-2, 7-n voltage transformer
8-1, 8-2, 8-n protection control terminal
9 protection control device
10-1, 10-2, 10-n IED
C1 to Cn information
CB1, CB2, CBn circuit breaker data
D1, Dn circuit-breaker switch-on request
LS5-1, LS5-2, LS5-n first disconnector data
LS6-1, LS6-2, LS6-n second disconnector data
V1, V2 simulated bus voltage
VL1, VL2, VLn line-voltage data

## Claims

1. A digital protection control device (9) configured to acquire a bus voltage by using data from a plurality of protection control terminals (8), each arranged on one of a plurality of lines (3) and configured to convert a voltage detected by a voltage transformer (7) arranged on the same one of the plurality of lines (3), a state of a circuit breaker (4) arranged on the same one of the plurality of lines, and a state of a disconnector (5, 6) arranged on the same one of the plurality of lines into digital data, the device comprising:
a simulated-bus-voltage selecting unit (91) configured to select the voltage data as a simulated bus voltage that is a simulated value of the bus voltage, on a basis of voltage data, wherein voltage data is digital data related to the voltages detected by the voltage transformers, data related to the states of the circuit breakers, and data related to the states of the disconnectors; and
a synchronism indicator (92) configured to perform a detection process of whether the voltage data and the simulated bus voltage selected by the simulated-bus-voltage selecting unit are in a synchronized state satisfying a certain relationship and to output information indicating a synchronized state to the protection control terminal wherein
the simulated-bus-voltage selecting unit is configured to determine whether the circuit breaker and the disconnector that are arranged on a line corresponding to the voltage data are in a closed state in order of arrival of the voltage data and, when the circuit breaker and the disconnector are in a closed state, the simulated-bus-voltage selecting unit is configured to select the voltage data of the corresponding line as a simulated bus voltage.

2. The protection control device (9) according to claim 1, wherein the synchronism indicator (92) is configured such that in a case where the synchronism indicator (92) has received a simulated bus voltage, when the circuit breaker (4) is in an open state and the disconnector (5, 6) is in a closed state, the synchronism indicator performs the detection process.

3. The protection control device (9) according to claim 1, wherein the synchronism indicator (92) is configured such that in a case where the synchronism indicator (92) has received a simulated bus voltage, when the circuit breaker (4) arranged on a line corresponding to a protection control terminal (8) that is a transmission source of a circuit-breaker switch-on request is in an open state and the disconnector (5, 6) arranged on the line is in a closed state, the synchronism indicator performs the detection process.

## Patentansprüche

1. Digitale schützende Steuervorrichtung (9), welche konfiguriert ist, um eine Busspannung unter Verwendung von Daten von einer Mehrzahl von schützenden Steueranschlüssen (8) zu erhalten, welche jeweils auf einer aus einer Mehrzahl von Leitungen (3) angeordnet sind und konfiguriert sind, um eine Spannung, welche durch einen Spannungswandler (7) detektiert wird, welche auf derselben der Mehrzahl von Leitungen (3) angeordnet ist, einen Zustand eines Leistungsschalters (4), welcher auf derselben der Mehrzahl von Leitungen angeordnet ist, und einen Zustand eines Trennschalters (5, 6), welcher auf derselben der Mehrzahl von Leitungen angeordnet ist, in digitale Daten umzuwandeln, wobei die Vorrichtung umfasst:
eine simulierte Busspannung-Auswahleinheit (91), welche konfiguriert ist, um auf der Grundlage von Spannungsdaten die Spannungsdaten als simulierte Busspannung auszuwählen, welche ein simulierter Wert der Busspannung ist, wobei Spannungsdaten digitale Daten, welche auf die Spannungen bezogen sind, welche durch die Spannungswandler detektiert werden, Daten, welche auf die Zustände der Leistungsschalter bezogen sind, und Daten sind, welche auf die Zustände der Trennschalter bezogen sind; und
einen Synchronisationsindikator (92), welcher konfiguriert ist, um einen Detektionsprozess auszuführen, um festzustellen, ob die Spannungsdaten und die simulierte Busspannung, welche durch die simulierte Busspannung-Auswahleinheit ausgewählt wird, sich in einem synchronisierten Zustand befinden, welcher eine bestimmte Beziehung erfüllt, und um Informationen auszugeben, welche einen synchronisierten Zustand an den schützenden Steueranschluss anzeigen, wobei
die simulierte Busspannung-Auswahleinheit konfiguriert ist, um zu bestimmen, ob der Leistungsschalter und der Trennschalter, welche auf einer Leitung angeordnet sind, welche den Spannungsdaten entspricht, in einem geschlossenen Zustand in der Ankunftsreihenfolge der Spannungsdaten sind, und wenn der Leistungsschalter und der Trennschalter in einem geschlossenen Zustand sind, die simulierte Busspannung-Auswahleinheit konfiguriert ist, um die Spannungsdaten der entsprechenden Leitung als eine simulierte Busspannung auszuwählen.

2. Schützende Steuervorrichtung (9) nach Anspruch 1, wobei der Synchronisationsindikator (92) derart konfiguriert ist, dass im Falle, dass der Synchronisationsindikator (92) eine simulierte Busspannung empfangen hat, wenn der Leistungsschalter (4) in einem offenen Zustand und der Trennschalter (5, 6) in einem geschlossenen Zustand ist, der Synchronisationsindikator den Detektionsprozess ausführt.

3. Schützende Steuervorrichtung (9) nach Anspruch 1, wobei der Synchronisationsindikator (92) derart konfiguriert ist, dass im Falle, dass der Synchronisationsindikator (92) eine simulierte Busspannung empfangen hat, wenn der Leistungsschalter (4), welcher auf einer Leitung angeordnet ist, welche einem schützenden Steueranschluss (8) entspricht, welcher eine Übertragungsquelle einer Leistungsschalter-Einschaltanfrage ist, in einem offenen Zustand ist und der Trennschalter (5, 6), welcher auf der Leitung angeordnet ist, in einem geschlossenen Zustand ist, der Synchronisationsindikator den Detektionsprozess ausführt.

## Revendications

1. Dispositif de commande de protection numérique (9) configuré pour acquérir une tension de bus en utilisant des données d'une pluralité de bornes de commande de protection (8), chacun étant disposé sur l'une d'une pluralité de lignes (3) et configuré pour convertir une tension détectée par un transformateur de tension (7) disposé sur la même une ligne de la pluralité des lignes (3), un état d'un coupe-circuit (4) disposé sur la même une ligne de la pluralité des lignes, et un état d'un sectionneur (5, 6) disposé sur la même ligne de la pluralité des lignes en données numériques, le dispositif comprenant :
une unité de sélection de tension de bus simulée (91) configurée pour sélectionner, sur la base de données de tension, les données de tension en tant que tension de bus simulée qui est une valeur simulée de la tension de bus, dans lequel les données de tension sont des données numériques associées aux tensions détectées par les transformateurs de tension, des données associées aux états des coupe-circuits et des données associées aux états des sectionneurs, et
un indicateur de synchronisation (92) configuré pour exécuter un processus de détection pour détecter si les données de tension et la tension de bus simulée sélectionnée par l'unité de sélection de tension de bus simulée sont ou ne sont pas dans un état synchronisé satisfaisant une certaine relation, et pour émettre des informations indiquant un état synchronisé à la borne de commande de protection, dans lequel
l'unité de sélection de tension de bus simulée est configurée pour déterminer si le coupe-circuit et le sectionneur qui sont disposés sur une ligne correspondant aux données de tension sont ou ne sont pas dans un état fermé dans l'ordre d'arrivée des données de tension et, lorsque le coupe-circuit et le sectionneur sont dans un état fermé, l'unité de sélection de tension de bus simulée est configurée pour sélectionner les données de tension de la ligne correspondante à titre de tension de bus simulée.

2. Dispositif de commande de protection (9) selon la revendication 1, dans lequel l'indicateur de synchronisation (92) est configuré de manière telle que, dans le cas où l'indicateur de synchronisation (92) a reçu une tension de bus simulée, lorsque le coupe-circuit (4) est dans un état ouvert et le sectionneur (5, 6) est dans un état fermé, l'indicateur de synchronisation exécute le processus de détection.

3. Dispositif de commande de protection (9) selon la revendication 1, dans lequel l'indicateur de synchronisation (92) est configuré de manière telle que, dans le cas où l'indicateur de synchronisation (92) a reçu une tension de bus simulée, lorsque le coupe-circuit (4), disposé sur une ligne correspondant à une borne de commande de protection (8) qui est une source de transmission d'une demande de déclenchement de coupe-circuit, est dans un état ouvert et le sectionneur (5, 6), disposé sur la ligne, est dans un état fermé, l'indicateur de synchronisation exécute le processus de détection.
